# EUROPEAN PATENT SPECIFICATION

(11) **EP 2 854 437 B1**
(45) Date of publication and mention of the grant of the patent: **08.05.2019**
(21) Application number: 14185522.1
(22) Date of filing: 19.09.2014
(51) Int. Cl.: H04W 24/00, H04W 12/12, H04W 8/00

(54) **Detecting the presence of rogue femtocells in enterprise networks**
Erfassung der Anwesenheit bösartiger Femtozellen in einem Unternehmensnetzwerk
Détection de présence de femtocellules indésirables dans des réseaux d'entreprise

(30) Priority: 30.09.2013 US 201314041034
(43) Date of publication of application: 01.04.2015
(73) Proprietor: AirMagnet, Inc., Westford MA 01886 (US)
(72) Inventor: Kuan, Chia-Chee, Los Altos, CA California 94024 (US); Resman, Tom, Colorado Springs, CO Colorado 80918 (US)
(74) Representative: Hargreaves, Timothy Edward

(56) References cited:
- US-A1- 2005 128 989
- US-A1- 2007 104 157
- US-A1- 2007 173 199
- US-B1- 7 459 898

## Description

### FIELD OF THE INVENTION

Embodiments of the present invention relate to wireless networking, and particularly to network security and detecting rogue femtocells in an enterprise wireless network.

### BACKGROUND OF THE INVENTION

A femtocell is a small base station that may be placed in a customer's residence or in a small business environment, for example. Femtocells may be utilized for off-loading macro radio network facilities, improving coverage locally in a cost-effective manner, and/or implementing home-zone services to increase revenue. The functionality in a femtocell is typically quite similar to the functionality implemented in a conventional base station router that is intended to provide wireless connectivity to a macro-cell that may cover an area of approximately a few square kilometers. One important difference between a femtocell and a conventional base station router is that home base station routers are designed to be inexpensive plug-and-play devices that can be purchased off-the-shelf and easily installed by a lay person. It is noted that femtocells operate at much lower power levels and provide connectivity to a much smaller area as compared to conventional base stations.

Femtocells are typically intended to be deployed in unsecured locations, such as a person's home or place of business. Wireless femtocells may be deployed without security features enabled. Consequently, femtocells are not considered trusted entities in the wireless communication system and may represent a security risk. Without security barriers at the femtocell, it is possible for a wireless client to gain access to the network. An unauthorized (i.e., rogue) femtocell may be connected to the network, exposing the wired network to unauthorized access by wireless clients in the coverage area and possibly affecting the performance of the wired and wireless networks. Thus, it is possible for a network to be compromised via a wireless connection. To minimize the risk to the wired network, it is desirable to locate and disable the rogue femtocell.

US 2007/173199A1 discloses systems and methods for wireless intrusion detection using spectral analysis.

US7459898B1 discloses a system and apparatus for detecting and analyzing a frequency spectrum

### SUMMARY OF THE INVENTION

The purpose and advantages of the illustrated embodiments will be set forth in and apparent from the description that follows. Additional advantages of the illustrated embodiments will be realized and attained by the devices, systems and methods particularly pointed out in the written description and claims hereof, as well as from the appended drawings.

In accordance with a purpose of the illustrated embodiments, in one aspect, a method for determining the presence of a femtocell in a network is provided according to claim 1.

### BRIEF DESCRIPTION OF THE DRAWINGS

The accompanying appendices and/or drawings illustrate various, non-limiting, examples, aspects in accordance with the present disclosure:
FIG. 1 illustrates an example communication network in accordance with an illustrated embodiment;
FIG. 2A is a spectral diagram illustrating an exemplary RF signal transmitted by a conventional cell tower and received within a building;
FIG. 2B is another spectral diagram illustrating an exemplary RF signal transmitted by a femtocell installed within a building;
FIG. 3 is a flowchart of operational steps of the network analyzer program of FIG. 1 in accordance with an illustrative embodiment of the present invention; and
FIG. 4 illustrates internal and external components of the server computer of FIG. 1 in accordance with an illustrative embodiment of the present invention.

### DETAILED DESCRIPTION OF CERTAIN EMBODIMENTS

The present invention is now described more fully with reference to the accompanying drawings, in which illustrated embodiments of the present invention are shown wherein like reference numerals identify like elements. The present invention is not limited in any way to the illustrated embodiments as the illustrated embodiments described below are merely exemplary of the invention, which can be embodied in various forms, as appreciated by one skilled in the art. Therefore, it is to be understood that any structural and functional details disclosed herein are not to be interpreted as limiting, but merely as a basis for the claims and as a representative for teaching one skilled in the art to variously employ the present invention. Furthermore, the terms and phrases used herein are not intended to be limiting but rather to provide an understandable description of the invention.

Unless defined otherwise, all technical and scientific terms used herein have the same meaning as commonly understood by one of ordinary skill in the art to which this invention belongs. Although any methods and materials similar or equivalent to those described herein can also be used in the practice or testing of the present invention, exemplary methods and materials are now described.

It must be noted that as used herein and in the appended claims, the singular forms "a", "an," and "the" include plural referents unless the context clearly dictates otherwise. Thus, for example, reference to "a stimulus" includes a plurality of such stimuli and reference to "the signal" includes reference to one or more signals and equivalents thereof known to those skilled in the art, and so forth.

It is to be appreciated the embodiments of this invention as discussed below are preferably a software algorithm, program or code residing on computer useable medium having control logic for enabling execution on a machine having a computer processor. The machine typically includes memory storage configured to provide output from execution of the computer algorithm or program.

As used herein, the term "software" is meant to be synonymous with any code or program that can be in a processor of a host computer, regardless of whether the implementation is in hardware, firmware or as a software computer product available on a disc, a memory storage device, or for download from a remote machine. The embodiments described herein include such software to implement the equations, relationships and algorithms described below. One skilled in the art will appreciate further features and advantages of the invention based on the below-described embodiments. Accordingly, the invention is not to be limited by what has been particularly shown and described, except as indicated by the appended claims.

As used herein, the term "rogue femtocell" refers to a femtocell set up by a user in order to gain access to a secure network of interest.

The method according to a preferred embodiment of the present invention is directed to techniques to detect and identify the presence of one or more femtocells in a secure wired network, e.g., a secure LAN, and/or a secure wireless network, e.g., a secure WLAN. The detected femtocell may be identified as authorized or unauthorized (rogue) based on a signature analysis process. Advantageously, according to an embodiment of the present invention, the method described herein enables network security personnel to easily and efficiently detect rogue femtocells, by preferably utilizing measuring instruments, such as spectrum analyzers.

A communication network is a geographically distributed collection of nodes interconnected by communication links and segments for transporting data between end nodes, such as personal computers and workstations, or other devices, such as sensors, etc. Many types of networks are available, with the types ranging from local area networks (LANs) to wide area networks (WANs). LANs typically connect the nodes over dedicated private communications links located in the same general physical location, such as a building or campus. WANs, on the other hand, typically connect geographically dispersed nodes over long-distance communications links, such as common carrier telephone lines, optical lightpaths, synchronous optical networks (SONET), synchronous digital hierarchy (SDH) links, or Powerline Communications (PLC), and others.

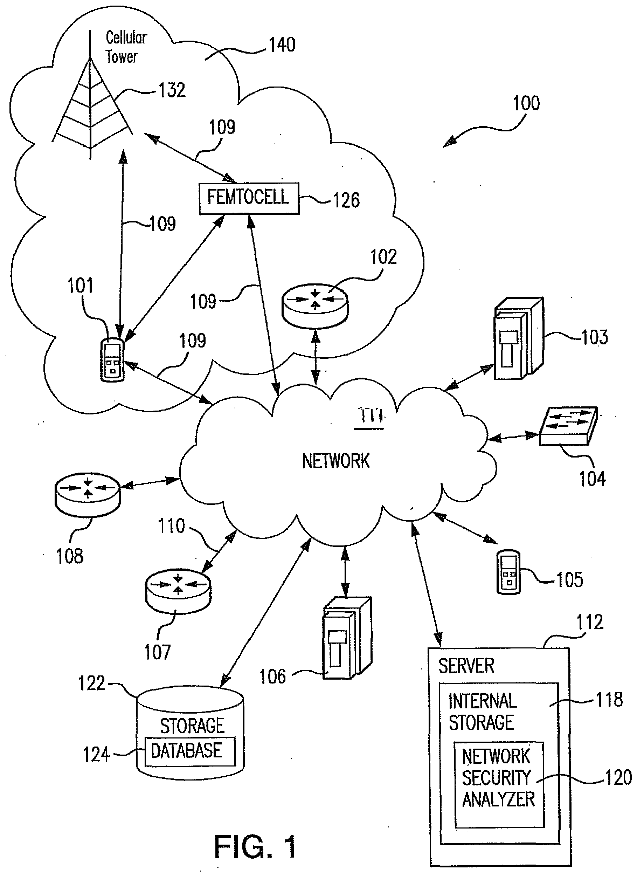

FIG. 1 is a schematic block diagram of an exemplary enterprise communication network 100 illustratively comprising nodes/devices 101-108 (e.g., mobile devices, servers, routers, wireless stations, and the like) interconnected by various methods of communication. For instance, the links 109 may comprise a wireless communication medium, where certain nodes are in communication with other nodes, e.g., based on distance, signal strength, current operational status, location, etc. Moreover, each of the devices can communicate data packets (or frames) with other devices using predefined network communication protocols as will be appreciated by those skilled in the art, such as various wired protocols and wireless protocols etc., where appropriate. In this context, a protocol consists of a set of rules defining how the nodes interact with each other.

As shown in FIG. 1, the exemplary communication network 100 may include mobile devices (MDs), such as MDs 101, 105, at least some of which may be interconnected by a radio access network (RAN) 140. The RAN 140 may be interconnected with the core enterprise network 111. The connections and operation for the exemplary communication network 100 will now be described. MD 101 is coupled to the RAN 140. Generally, the MD 101 may include any device capable of connecting to a wireless network such as the radio access network 140, or other mobile nodes. Such devices include cellular telephones, smart phones, pagers, radio frequency (RF) devices, infrared (IR) devices, tablet devices, integrated devices combining one or more of the preceding devices, and the like. The MD 101 may also include other devices that have a wireless interface such as Personal Digital Assistants (PDAs), handheld computers, personal computers, multiprocessor systems, microprocessor-based or programmable consumer electronics, network PCs, wearable computers, and the like.

The RAN 140 manages the radio resources and provides the user with a mechanism to access the core network 111. The RAN 140 transports information to and from devices capable of wireless communication, such as the MD 101. The RAN 140 may include both wireless and wired components. For example, the RAN 140 may include a cellular tower 132 that is linked to a wired telephone network. Typically, the cellular tower 132 carries communication to and from cell phones, pagers, and other wireless devices, and the wired telephone network carries communication to regular phones, long-distance communication links, and the like. As shown in FIG. 1, the RAN 140 may also include one or more base station routers referred to hereinafter as femtocells, such as femtocell 126. The MD 101 may communicate with the cellular tower 132 and/or femtocell 126 via a downlink and uplink. The downlink (or forward link) refers to the communication link from the cellular tower 132 and/or femtocell 126 to the MD 101, and the uplink (or reverse link) refers to the communication link from the MD 101 to the cellular tower 132 and/or femtocell 126.

The cellular tower 132 may transmit data and control information on the downlink to the MD 101 and/or may receive data and control information on the uplink from the MD 101. On the downlink, a transmission from the cellular tower 132 may encounter interference due to transmissions from neighbor towers, base stations or from other wireless RF transmitters.

Femtocells typically have a much smaller power output than conventional base stations that are used to provide coverage to macrocells. For example, a typical femtocell has a transmission power on the order of 10 mW. Consequently, the range of a typical femtocell is much smaller than the range of a macrocell. For example, a typical range of a femtocell is approximately 100 m. Clusters of femtocells 126 may also be deployed in the RAN 140 to provide coverage to larger areas and/or to more users.

However, the femtocell 126 may not be a trusted element of the communication network 100. For example, the service provider may not be able to ensure that the femtocell 126 cannot be accessed by an unauthorized user who may attempt to modify or hack the femtocell 126. Furthermore, the femtocell 126 may be susceptible to hacking over a network. For example, the user of the femtocell 126 may not provide sufficient firewall protection, virus protection, and the like, which may permit unauthorized users to hack into the femtocell 126. Consequently, it is noted that at least in some cases the femtocell 126 may expose the core network 101 to unauthorized access by any wireless client in the coverage area and possibly affecting the performance of the wired and wireless networks. The unauthorized femtocells are referred to herein as rogue femtocells. Generally, femtocell 126 is expected to be deployed in conjunction with a macro-cellular network in an overlay configuration to provide overlay coverage within the building or other physical location of the secure core network 101, which may have poor macro-cellular network coverage.

Referring back to FIG. 1, a server computer 112 and storage unit 122 may also connect to the core network 111. Briefly described, the server 112 may be used to monitor and aid in carrying out the operator's security control for the communication through its networks 101, 140 via, for example, a network security analyzer program 120. The network security analyzer program 120 may comprise program instructions stored on one or more computer-readable storage devices, which may include internal storage 118 on the server computer 112. The network security analyzer program 120 may be, for example, a computer program or program component for detecting the presence of rogue femtocells within the secure network, such as the core network 101 in FIG.1. Data gathered, captured, and maintained for use by the network security analyzer program 120 may be kept in internal storage 118 of the server computer 112 or in one or more databases 124 of the storage unit 122.

Those skilled in the art will understand that any number of nodes, devices, links, etc. may be used in the computer network, and that the view shown herein is for simplicity. Also, while the embodiments are shown herein with reference to a general network cloud, the description herein is not so limited, and may be applied to networks that are hardwired.

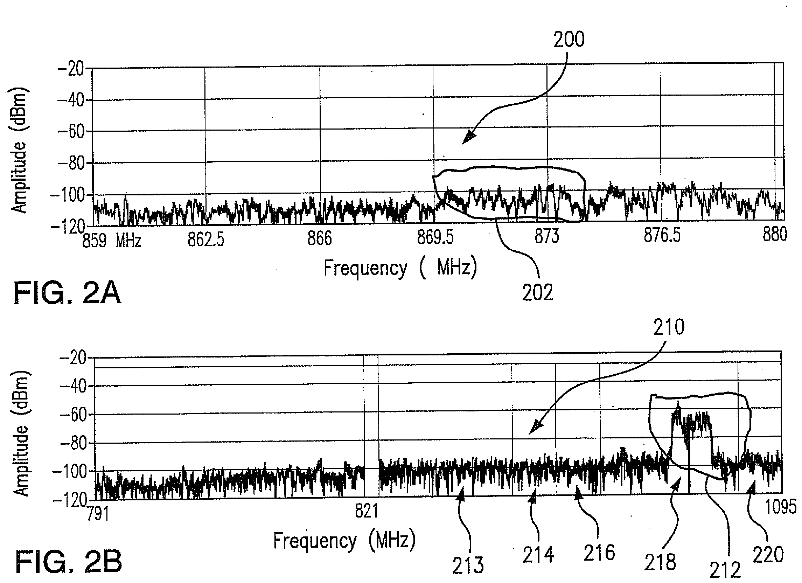

FIG. 2A is a spectral diagram illustrating an exemplary RF signal transmitted by a conventional cell tower and received within a building. As is well-known in the art, the signal strength received by a communication device, such as the MD 101, may be a function of a number of factors including the magnitude of the transmission field (e.g., the power behind transmissions at the transmission source) and the distance from the transmission source, such as the cell tower 132. Weak signal strength may be caused by distance, interference or other factors which degrade, alter, or disrupt signal transmission to an end user. Interference may include electromagnetic interference, co-channel or cross talk, cell breathing or reduction in signal-to-noise ratio, which may degrade the signal or make the signal difficult to recognize.

Spectral diagram 200 illustrates a sample spectrum of an exemplary authorized RF signal transmitted by a distant transmission source, such as the cell tower 132, as measured inside a building. Fig. 2A illustrates the frequency spectrum of the received signal in a logarithmic scale. The signal strength 202 for this particular example is approximately equal to -100dB. Thus, depending upon the distance from the cellular tower 132, among other factors, the signal strength value of the RF downlink signal inside a building can be substantially small.

FIG. 2B is another spectral diagram illustrating an exemplary RF signal transmitted by a femtocell installed within a building. A cellular operator is typically allocated a certain frequency spectrum band for use in providing its cellular service. In this exemplary illustration, the detected signals of the exemplary frequency spectrum 210 correspond to five separate frequency bands 213-220. Each of the frequency bands 213-220 corresponds to a particular cellular service operator. FIG. 2B illustrates the frequency spectrum of the received signal in a logarithmic scale as well.

In the illustrated example, the RF signal strength 212 corresponds to the signal transmitted by an exemplary femtocell installed within a building. As shown in FIG. 2B, the RF signal strength 212 is approximately equal to -60dB. Consequently, in these illustrative examples, the strength of a signal transmitted by the femtocell 126 installed within a building is typically substantially stronger as compared to a signal transmitted by a distant cell tower 132. These examples are illustrative only and not intended as any limitation on the method described herein. Various embodiments of the present invention contemplate a detection of the presence of a rogue femtocell in a vicinity of a secure network based on identifying an unknown signal within the predetermined frequency spectrum having a magnitude exceeding a predetermined threshold value using the network security analyzer program 120.

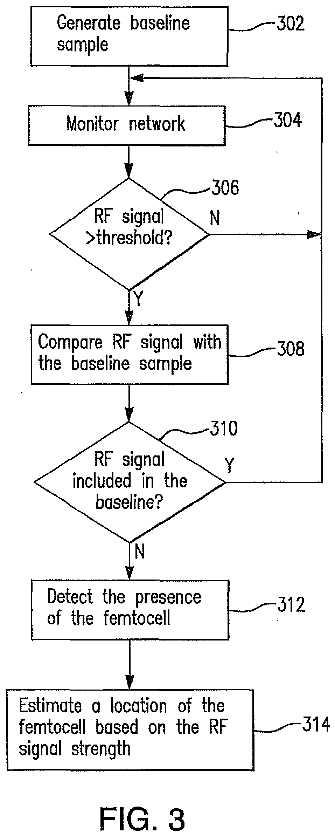

FIG. 3 is a flowchart of operational steps of the network security analyzer program 120 of FIG. 1 in accordance with an illustrative embodiment of the present invention. The network security analyzer program 120 may be, for example, a computer program or program component for identifying the presence of the rogue femtocell 126 in the exemplary network 100. At step 302, the network security analyzer program 120 preferably captures a baseline sample. In accordance with various embodiments of the present invention, the baseline sample may include, for example, but not limited to, a plurality of measurements taken across a plurality of downlink radio frequency RF bands within the secure network. These measurements may be taken upon determination that a given network is secure. The baseline sample is preferably stored in the database 124 of the storage unit 122.

In an embodiment of the present invention, the measurements preferably include a plurality of RF signatures corresponding to a plurality of authorized RF communication signals within the communication network 100. These RF signatures may comprise a plurality of measured signal qualities that collectively represent a frequency spectrum. Each measured signal quality in the plurality of measured signal qualities corresponds to a portion of the frequency spectrum. In an embodiment of the present invention, a measuring tool, such as, for example, but not limited to, a spectrum analyzer can be used to scan any portion of the downlink frequency spectrum in order to measure an RF signature. Spectrum analyzers typically capture and process received RF signal in real time. Those skilled in the art will appreciate that while the baseline sample is captured, it will be necessary to ensure that transmission from unauthorized femtocells do not occur so that they are not inadvertently designated as authorized transmissions.

After establishing the baseline sample, at step 304, the network security analyzer program 120 preferably continuously monitors the communication network 100. In an embodiment of the present invention this step preferably involves obtaining periodic measurement data from one or more measuring instruments, disseminated at various locations within the monitored communication network 100. These measuring instruments are preferably capable of scanning a predetermined range of frequency bands. Again, these measuring instruments may include, but not limited to, spectrum analyzers. In many instances, the capabilities of the measuring instrument will dictate whether or not parameters can be concurrently sampled, which parameters can be sampled, and how frequently such parameters can be sampled. However, at a minimal level, a parameter that is indicative of signal strength is measured at each predetermined frequency band. In a preferred embodiment, the selected spectrum is sampled approximately every 2 seconds. At step 304, the network security analyzer program 120 preferably receives the parameters corresponding to all detected downlink RF signals within the monitored enterprise network 100. The particular parameters may vary from one type of detected signal to another.

Next, at step 306, the network security analyzer program 120 preferably determines whether any of the received signal parameters exceeds a predetermined threshold. In a particular secure network environment, it may be known, for example, that no cell towers transmit signals having a magnitude above -90dB, as measured within the physical secure network environment. In this non-limiting example, the predetermined threshold may have a value approximately equal to -90dBs. If there are no received signal parameters exceeding the predetermined threshold (step 306, no branch), the network security analyzer program 120 preferably continues to analyze the monitored data (at step 304). However, in response to determining that at least one detected RF signal parameter exceeded the predetermined threshold (step 306, yes branch), at step 308, the network security analyzer program 120 preferably further analyzes the detected RF signal with respect to the baseline sample captured at step 302. In an embodiment of the present invention, the network security analyzer program 120 preferably compares the RF signature of the detected RF signal with the plurality of RF signatures contained within the baseline sample. The analysis and comparison step may be satisfactorily implemented by a number of different known techniques. In an embodiment of the present invention, at step 308, the network security analyzer program 120 preferably performs a correlation analysis between the detected RF signal signature and a plurality of signatures stored, for example, in the database 124 of the storage unit 122.

At step 310, the network security analyzer program 120 preferably determines whether there was a match between the RF signature of the detected signal and one of the plurality of RF signatures contained in the baseline sample and stored in the database 124 of the storage unit 122. In response to determining that there is a match between the detected RF signal and one or more known RF signatures (step 310, yes branch), the network security analyzer program 120 preferably continues to monitor the network (at step 304). In response to determining that there is no match between the detected RF signal signature and the plurality of the RF signatures contained in the baseline sample (step 310, no branch), the network security analyzer program 120 preferably designates the source of the detected unknown RF signal to be a rogue femtocell, at step 312. In an embodiment of the present invention, at step 312, the network security analyzer program 120 preferably stores the RF signature of the detected unknown RF signal in the database 124.

Next, at step 314, the network security analyzer program 120 optionally estimates a location of the rogue femtocell 126 based, for example, on the signal strength of the detected RF signal. According to an embodiment of the present location, the network security analyzer program 120 preferably maintains an RF physical model of the coverage area associated with the communication network 100 environment. As discussed in more detail below, the RF physical model preferably returns an estimated physical location of the rogue femtocell 126, given the strength of the detected RF signal. For example, in one implementation, the RF physical model comprises a radio coverage map or matrix that indicates the expected signal strength detected at a measuring instrument received from a wireless node, assuming a uniform transmit power, at a given location defined in x-, and y- coordinates. This coverage map can be populated in a variety of ways. For example, the radio coverage maps can be populated with the results of an extensive site survey, according to which a wireless transmitter is placed at different locations in the physical space. During the site survey, the measuring instruments operate in a listening mode that cycles between the antennas and report the resulting signal strength of the signal transmitted by the wireless transmitter used to conduct the site survey. In one implementation, the measuring instrument can be configured to transmit the signal strength data back to the wireless transmitter, which may be a laptop computer or other wireless device. The coverage maps are preferably constructed by associating the signal strength and location data in the coverage maps corresponding to each measuring instrument.

In summary, the various embodiments of the present invention provide a cost effective method for detecting the presence of the rogue femtocell in a secure network based on an RF signature analysis process. Advantageously, the method presented herein contemplates sweeping a plurality of downlink frequency bands allocated to a plurality of cellular service providers.

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of the present invention may be written in any combination of one or more programming languages, including an object oriented programming language such as Java, Smalltalk, C++ or the like and conventional procedural programming languages, such as the "C" programming language or similar programming languages.

Aspects of the present invention are described above with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

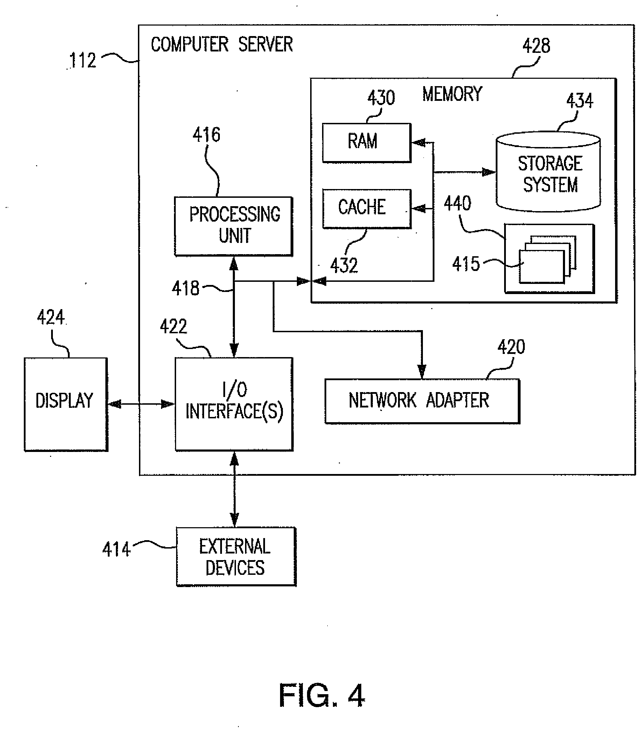

Figure 4 illustrates internal and external components of server computer 112 in accordance with an illustrative embodiment. Server 112 is only one example of a suitable server computer and is not intended to suggest any limitation as to the scope of use or functionality of embodiments of the invention described herein. Regardless, server 112 is capable of being implemented and/or performing any of the functionality set forth hereinabove.

Server 112 is operational with numerous other general purpose or special purpose computing system environments or configurations. Examples of well-known computing systems, environments, and/or configurations that may be suitable for use with computer system/server 112 include, but are not limited to, personal computer systems, server computer systems, thin clients, thick clients, hand-held or laptop devices, multiprocessor systems, microprocessor-based systems, set top boxes, programmable consumer electronics, network PCs, minicomputer systems, mainframe computer systems, and distributed data processing environments that include any of the above systems or devices, and the like.

Server 112 may be described in the general context of computer system-executable instructions, such as program modules, being executed by a computer system. Generally, program modules may include routines, programs, objects, components, logic, data structures, and so on that perform particular tasks or implement particular abstract data types. Server 112 may be practiced in distributed data processing environments where tasks are performed by remote processing devices that are linked through a communications network. In a distributed data processing environment, program modules may be located in both local and remote computer system storage media including memory storage devices.

Server 112 is shown in FIG. 4 in the form of a general-purpose computing device. The components of server 112 may include, but are not limited to, one or more processors or processing units 416, a system memory 428, and a bus 418 that couples various system components including system memory 428 to processor 416.

Bus 418 represents one or more of any of several types of bus structures, including a memory bus or memory controller, a peripheral bus, an accelerated graphics port, and a processor or local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus.

Computer server 112 typically includes a variety of computer system readable media. Such media may be any available media that is accessible by computer server 112, and it includes both volatile and non-volatile media, removable and non-removable media.

System memory 428 can include computer system readable media in the form of volatile memory, such as random access memory (RAM) 430 and/or cache memory 432. Computer server 112 may further include other removable/non-removable, volatile/non-volatile computer system storage media. By way of example only, storage system 434 can be provided for reading from and writing to a non-removable, non-volatile magnetic media (not shown and typically called a "hard drive"). Although not shown, a magnetic disk drive for reading from and writing to a removable, non-volatile magnetic disk (e.g., a "floppy disk"), and an optical disk drive for reading from or writing to a removable, non-volatile optical disk such as a CD-ROM, DVD-ROM or other optical media can be provided. In such instances, each can be connected to bus 418 by one or more data media interfaces. As will be further depicted and described below, memory 428 may include at least one program product having a set (e.g., at least one) of program modules that are configured to carry out the functions of embodiments of the invention.

Program/utility 440, having a set (at least one) of program modules 415, such as the network security analyzer program 120, may be stored in memory 428 by way of example, and not limitation, as well as an operating system, one or more application programs, other program modules, and program data. Each of the operating system, one or more application programs, other program modules, and program data or some combination thereof, may include an implementation of a networking environment. Program modules 415 generally carry out the functions and/or methodologies of embodiments of the invention as described herein.

Computer server 112 may also communicate with one or more external devices 414 such as a keyboard, a pointing device, a display 424, etc.; one or more devices that enable a user to interact with computer server 112; and/or any devices (e.g., network card, modem, etc.) that enable computer server 112 to communicate with one or more other computing devices. Such communication can occur via Input/Output (I/O) interfaces 422. Still yet, computer server 112 can communicate with one or more networks such as a local area network (LAN), a general wide area network (WAN), and/or a public network (e.g., the Internet) via network adapter 420. As depicted, network adapter 420 communicates with the other components of computer server 112 via bus 418. It should be understood that although not shown, other hardware and/or software components could be used in conjunction with computer server 112. Examples, include, but are not limited to: microcode, device drivers, redundant processing units, external disk drive arrays, RAID systems, tape drives, and data archival storage systems, etc.

The flowchart and block diagrams in the Figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

Features of one aspect may be combined with other features of the same or other aspects in any appropriate combination. According to embodiments, features of any one claim may be combined with features of any one or more other claims, as appropriate, regardless of the dependency of those claims.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope of the claims. The terminology used herein was chosen to best explain the principles of the embodiments, the practical application or technical improvement over technologies found in the marketplace, or to enable others of ordinary skill in the art to understand the embodiments disclosed herein.

## Claims

1. A method for determining the presence of an unauthorized femtocell in a network (140), said network comprising one or more authorized femtocells (126) providing overlay coverage within a building in an overlay configuration with a macrocell tower (132), the method being performed by a processor within an apparatus (112) and comprising the steps of:
capturing a baseline sample for the network , wherein the baseline sample comprises a plurality of measurements obtained from one or more measuring instruments disseminated inside the building across a plurality of downlink radio frequency RF bands within the network wherein while the baseline sample is captured, it is ensured that transmissions from unauthorized femtocells do not occur; and
storing the captured baseline sample as a plurality of RF signatures in a database (124);
monitoring the network to identify an RF signal, wherein identifying an RF signal means determining, based on further measurements obtained from said one or more measuring instruments across one or more of said downlink RF bans, a RF signature of said RF signal,
wherein each of said measurements and said further measurements comprises at least RF signal strength measurements, such that each of said stored and determined RF signatures comprises at least a plurality of RF signal strength measurements collectively representing a frequency spectrum;
determining from said RF signature if the identified RF signal has a signal strength value exceeding a predetermined threshold, wherein the value of said threshold is such that no macrocell towers transmit signals having a value above said threshold, as measured within said building;
determining whether the baseline sample does not include the identified RF signal having a signal strength value exceeding the predetermined threshold by comparing the RF signature of the identified RF signal with the plurality of RF signatures stored in the database (124) to determine a match therebetween; and
determining the presence of a said unauthorized femtocell in the network when the baseline sample does not include the identified RF signal exceeding the predetermined threshold.

2. The method of claim 1, further comprising estimating a position of a said unauthorized femtocell based on the signal strength value of the identified RF signal.

3. The method of claim 1, wherein the plurality of measurements comprises the plurality of RF signatures corresponding to a plurality of authorized RF communication signals within the network.

4. The method of claim 1, wherein the step of monitoring said network comprises scanning a predetermined RF spectrum.

5. The method of claim 3, wherein each of the plurality of RF signatures comprises a plurality of signal characteristics.

6. The method of claim 1, wherein the measuring instrument is a spectrum analyzer.

7. An apparatus (112), comprising:
a memory (428)
a processor (416) disposed in communication with said memory (428), and configured to execute a plurality of instructions stored in the memory, wherein the instructions cause the processor (416) to perform the method according to any of claims 1 to 6.

8. A computer program comprising instructions, which when executed by a processor (416) within an apparatus (112), cause said processor (416) to perform the method according to any of claims 1 to 6.

## Patentansprüche

1. Verfahren zum Bestimmen des Vorhandenseins einer nicht autorisierten Femtozelle in einem Netzwerk (140), wobei das Netzwerk eine oder mehrere autorisierte Femtozellen (126) umfasst, die eine Überlagerungsabdeckung innerhalb eines Gebäudes in einer Überlagerungskonfiguration mit einem Makrozellenturm (132) bereitstellen, wobei das Verfahren von einem Prozessor innerhalb einer Vorrichtung (112) ausgeführt wird und die folgenden Schritte umfasst:
Erfassen eines Basisabtastwerts für das Netzwerk, wobei der Basisabtastwert eine Vielzahl von Messungen umfasst, die von einem oder mehreren Messinstrumenten erhalten wurden, die im Inneren des Gebäudes über mehrere Downlink-Funkfrequenz-HF-Bänder innerhalb des Netzwerks verteilt sind, wobei, während der Basisabtastwert erfasst wird, sichergestellt wird, dass Übertragungen von nicht autorisierten Femtozellen nicht stattfinden; und
Speichern des erfassten Basisabtastwerts als eine Vielzahl von HF-Signaturen in einer Datenbank (124);
Überwachen des Netzwerks zum Identifizieren eines HF-Signals, wobei das Identifizieren eines HF-Signals bedeutet, auf der Grundlage von weiteren Messungen, die von dem einen oder den mehreren Messinstrumenten über einen oder mehrere der Downlink-HF-Bans erhalten werden, eine HF-Signatur des HF-Signals zu bestimmen,
wobei jede der Messungen und der weiteren Messungen mindestens HF-Signalstärkemessungen umfasst, so dass jede der gespeicherten und bestimmten HF-Signaturen mindestens eine Vielzahl von HF-Signalstärkemessungen umfasst, die gemeinsam ein Frequenzspektrum darstellen;
Bestimmen anhand der HF-Signatur, ob das identifizierte HF-Signal einen Signalstärkewert aufweist, der einen vorbestimmten Schwellenwert überschreitet, wobei der Wert des Schwellenwerts so ist, dass keine Makrozellentürme Signale übertragen, die einen Wert oberhalb des Schwellenwerts aufweisen, wie innerhalb des Gebäudes gemessen;
Bestimmen, ob der Basisabtastwert das identifizierte HF-Signal mit einem Signalstärkewert, der den vorbestimmten Schwellenwert überschreitet, nicht enthält, durch Vergleichen der HF-Signatur des identifizierten HF-Signals mit der Vielzahl von in der Datenbank (124) gespeicherten HF-Signaturen, um eine Übereinstimmung zwischen diesen zu bestimmen; und
Bestimmen des Vorhandenseins einer nicht autorisierten Femtozelle in dem Netzwerk, wenn der Basisabtastwert das identifizierte HF-Signal, das den vorbestimmten Schwellenwert überschreitet, nicht enthält.

2. Verfahren nach Anspruch 1, ferner umfassend das Schätzen einer Position einer nicht autorisierten Femtozelle basierend auf dem Signalstärkewert des identifizierten HF-Signals.

3. Verfahren nach Anspruch 1, wobei die Vielzahl von Messungen die Vielzahl von HF-Signaturen umfasst, die einer Vielzahl von autorisierten HF-Kommunikationssignalen innerhalb des Netzwerks entsprechen.

4. Verfahren nach Anspruch 1, wobei der Schritt des Überwachens des Netzwerks das Abtasten eines vorbestimmten HF-Spektrums umfasst.

5. Verfahren nach Anspruch 3, wobei jede der Vielzahl von HF-Signaturen eine Vielzahl von Signalcharakteristiken umfasst.

6. Verfahren nach Anspruch 1, wobei das Messinstrument ein Spektrumanalysator ist.

7. Vorrichtung (112), umfassend:
einen Speicher (428)
einen Prozessor (416), der in Kommunikation mit dem Speicher (428) angeordnet und konfiguriert ist, um eine Vielzahl von Anweisungen auszuführen, die in dem Speicher gespeichert sind, wobei die Anweisungen den Prozessor (416) dazu veranlassen, das Verfahren nach einem der Ansprüche 1 bis 6 auszuführen.

8. Computerprogramm, das Anweisungen umfasst, die bei Ausführung durch einen Prozessor (416) in einer Vorrichtung (112) den Prozessor (416) dazu veranlassen, das Verfahren nach einem der Ansprüche 1 bis 6 auszuführen.

## Revendications

1. Procédé de détermination de la présence d'une femtocellule non autorisée dans un réseau (140), ledit réseau comprenant une ou plusieurs femtocellules autorisées (126) fournissant une couverture de superposition dans un bâtiment dans une configuration de superposition avec une tour à macrocellules (132), le procédé étant exécuté par un processeur dans un appareil (112) et comprenant les étapes consistant à:
capturer un échantillon de référence pour le réseau, dans lequel l'échantillon de référence comprend une pluralité de mesures obtenues à partir d'un ou plusieurs instruments de mesure disséminés à l'intérieur du bâtiment sur une pluralité de bandes RF de radiofréquence de liaison descendante au sein du réseau, dans lequel, pendant la capture de l'échantillon de référence, on s'assure que les transmissions provenant de femtocellules non autorisées ne se produisent pas; et
stocker l'échantillon de référence capturé sous forme d'une pluralité de signatures RF dans une base de données (124);
surveiller le réseau pour identifier un signal RF, l'identification d'un signal RF signifiant la détermination d'une signature RF dudit signal RF, sur la base de mesures supplémentaires obtenues à partir du ou desdits instruments de mesure sur une ou plusieurs desdites interdictions RF de liaison descendante,
dans lequel chacune desdites mesures et desdites mesures supplémentaires comprend au moins des mesures d'intensité de signal RF, de sorte que chacune desdites signatures RF mémorisées et déterminées comprend au moins une pluralité de mesures d'intensité de signal RF représentant collectivement un spectre de fréquence;
déterminer à partir de ladite signature RF si le signal RF identifié a une valeur d'intensité de signal dépassant un seuil prédéterminé, la valeur dudit seuil étant telle qu'aucune tour à macrocellules ne transmette de signaux ayant une valeur supérieure audit seuil, tel que mesuré à l'intérieur dudit bâtiment;
déterminer si l'échantillon de référence n'inclut pas le signal RF identifié ayant une valeur d'intensité de signal dépassant le seuil prédéterminé en comparant la signature RF du signal RF identifié à la pluralité de signatures RF stockées dans la base de données (124) pour déterminer une correspondance entre elles; et
déterminer la présence d'une dite femtocellule non autorisée dans le réseau lorsque l'échantillon de référence n'inclut pas le signal RF identifié dépassant le seuil prédéterminé.

2. Procédé selon la revendication 1, comprenant en outre l'estimation d'une position d'une dite femtocellule non autorisée sur la base de la valeur d'intensité de signal du signal RF identifié.

3. Procédé selon la revendication 1, dans lequel la pluralité de mesures comprend la pluralité de signatures RF correspondant à une pluralité de signaux de communication RF autorisés dans le réseau.

4. Procédé selon la revendication 1, dans lequel l'étape de surveillance dudit réseau comprend le balayage d'un spectre RF prédéterminé.

5. Procédé selon la revendication 3, dans lequel chacune de la pluralité de signatures RF comprend une pluralité de caractéristiques de signal.

6. Procédé selon la revendication 1, dans lequel l'instrument de mesure est un analyseur de spectre.

7. Appareil (112) comprenant:
une mémoire (428)
un processeur (416), disposé en communication avec ladite mémoire (428) et configuré pour exécuter une pluralité d'instructions stockées dans la mémoire, les instructions amenant le processeur (416) à exécuter le procédé selon l'une quelconque des revendications 1 à 6.

8. Programme d'ordinateur comprenant des instructions qui, lorsqu'elles sont exécutées par un processeur (416) à l'intérieur d'un appareil (112), amènent ledit processeur (416) à exécuter le procédé selon l'une quelconque des revendications 1 à 6.
